# EUROPÄISCHE PATENTANMELDUNG

(11) **EP 2 236 939 A1**
(43) Veröffentlichungstag der Anmeldung: **06.10.2010**
(21) Anmeldenummer: 09004470.2
(22) Anmeldetag: 27.03.2009
(51) Int. Cl.: F23R 3/60

(54) **Vorrichtung zur Montage und Demontage eines Bauteils einer Gasturbine**

(71) Anmelder: Siemens Aktiengesellschaft, 80333 München (DE)
(72) Erfinder: Drogan, Thorsten, 13435 Berlin (DE); Griese, Andreas, 10585 Berlin (DE); Hesse, Thomas, 12589 Berlin (DE); Hofmann, Markus, 44581 Castrop-Rauxel (DE); Hommel, Katja, 45134 Essen (DE); Jüttner, Christoph, 44135 Dortmund (DE); Meuwsen, Frank, 45289 Essen (DE); Neubauer, Michael, 13591 Berlin (DE); Niederbremer, Fabian, 12487 Berlin (DE); Siegert, Sven, 45355 Essen (DE)

(57) **Zusammenfassung**

Die Erfindung betrifft eine Vorrichtung (22) zur Montage und Demontage eines Gasturbinen-Bauteils, welche zumindest einen Rahmen (30) mit einem ringförmigen Montageflansch (26) zur Befestigung der Vorrichtung (22) an einem Gehäuse (10) der Gasturbine und ein sich am Rahmen (30) abstützenden teleskopisch ausfahrbaren Gestell (38, 44) mit einer Befestigungsvorrichtung (51) aufweist, welche Befestigungsvorrichtung (51) zum Befestigen mit einem Gasturbinen-Bauteil ausgestaltet ist. Um Beschädigungen des Gasturbinen-Bauteils bei Einsetzen in das Innere der Gasturbine durch eine Gehäuseöffnung (18) oder auch um die Gefährdung von Servicepersonal während dieser Einsetzbewegung zu vermeiden, ist vorgesehen, das Gasturbinen-Bauteil mit Hilfe der Vorrichtung (22) aus der Vorrichtung (22) in die Gasturbine bzw. aus der Gasturbine in die Vorrichtung (22) zu verfahren.

## Beschreibung

Die Erfindung betrifft eine Vorrichtung zur Montage und Demontage eines Bauteils einer Gasturbine umfassend einen Rahmen mit einem ringförmigen Montageflansch zur Befestigung der Vorrichtung an einem Gehäuse der Gasturbine.

Gasturbinen, deren Komponenten und deren Wirkungsweise sind prinzipiell bekannt. Was die Brennkammer einer Gasturbine angeht, so unterscheidet man zwischen Ringbrennkammern und Rohrbrennkammern. Rohrbrennkammern sind dabei auf einem konzentrisch zur Maschinenachse liegendem Kreis gleichmäßig um einen Gasturbinenrotor verteilt. Jeder dieser zumeist zylindrischen Rohrbrennkammern umfasst ein Brennerrohr und ein Übergangsstück. Am jedem Brennerrohr ist an einem äußeren Ende jeweils einen oder mehrere Brenner mit einem oder mehreren Brennerstufen vorgesehen, durch denen ein brennbares Fluid oder Fluid-Luft-Gemisch in die zugehörige Brennkammer eingedüst, dort gezündet und zu einem Heißgas verbrannt werden kann. Der Brenner sitzt folglich im Brennerrohr, welches im Englischen auch als Basket bezeichnet wird. An dem zweiten, dem brennerseitigen Ende gegenüberliegenden Ende eines jeden Brennerrohrs sind die Übergangsstücke vorgesehen. Die Übergangsstücke werden im Englischen als Transition bezeichnet und weisen entlang ihrer Längserstreckung sich verändernde Querschnittkonturen auf, um das Heißgas aus den einzelnen zylindrischen Brennerrohren in einen Ringkanal zu überführen. Hierzu haben die Übergangsstücke einströmseitig einen kreisrunden Querschnitt, der ausströmseitig in einen sektorförmigen Querschnitt übergeht. Alle sektorförmigen Querschnitte der Übergangsstücke liegen in der Regel in Umfangsrichtung aneinander, so dass das in den einzelnen Rohrbrennkammern erzeugte Heißgas verlustarm dort in den Ringkanal überführt werden kann. Im Ringkanal sind dann die in der Turbine angeordneten Turbinenschaufeln stufenweise vorgesehen. Jede Turbinenstufe wird dabei von einem Kranz von Leitschaufeln und einem Kranz von Laufschaufeln gebildet, wobei die Laufschaufeln stromab der Leitschaufeln angeordnet sind.

Im Servicefall, sofern der Austausch des Brenners, des Brennerrohrs oder des Übergangsstücks erforderlich ist, müssen bisher Monteure die Befestigung der einzelnen betreffenden Gasturbinen-Bauteile lösen, wonach diese dann durch die im Gehäuse angeordnete Brenneröffnung händisch oder mit Hilfe mechanischer Unterstützung mittels eines Hebezeugs aus dem Gehäuseinneren herausgenommen werden.

Bei dem Herausnehmen der im Innern angeordneten Gasturbinen-Bauteile kann es jedoch passieren, dass die Gasturbinen-Bauteile an das Gehäuse schlagen und dabei beschädigt werden. Dies gilt ebenso beim Hereinbewegen zu montierender Gasturbinen-Bauteile. Daneben besteht währenddessen auch eine Gefährdung des Servicepersonals aufgrund der großen Abmaße der betroffenen Gasturbinen-Bauteile.

Zudem können bei stationären zur Energiegewinnung vorgesehenen Gasturbinen der Leistungsklasse größer 100 MW die Brenner, die Brennerohre als auch die Übergangsstücke ein Eigengewicht aufweisen, welches von einem oder mehreren Monteuren nicht mehr allein mit Muskelkraft sicher handhabbar sind.

Aufgabe der Erfindung ist daher die Bereitstellung einer Vorrichtung zur Montage und Demontage eines Bauteils einer Gasturbine, bei dem die Beschädigung des zu montierenden oder demontierenden Bauteils während des Hereinbewegens in das Gasturbinengehäuse oder während des Herausbewegens aus dem Gasturbinengehäuse sicher vermieden wird. Weitere Aufgabe der Erfindung ist die Bereitstellung einer Vorrichtung, mit der eine Gefährdung des Servicepersonals weitestgehend vermieden werden kann.

Die Aufgabe wird durch eine Vorrichtung gemäß den Merkmalen des Anspruchs 1 gelöst.

Hierzu umfasst die Vorrichtung einen Rahmen mit einem ringförmigen Montageflansch, mittels dem die Vorrichtung an einer im Gehäuse der Gasturbine angeordneten Öffnung befestigt werden kann. An dem Rahmen ist ein teleskopisch ausfahrbares Gestell mit einer Befestigungsvorrichtung vorgesehen. Die Befestigungsvorrichtung dient zum Befestigen des zu montierenden oder demontierenden Gasturbinen-Bauteils an der Vorrichtung selber.

Der ringförmige Montageflansch wird an einer kreisförmigen Öffnung des Gehäuses angeschraubt, so dass das verfahrbare Gestell und die daran angeordnete Befestigungsvorrichtung samt dem zu montierenden Gasturbinen-Bauteil aus der Vorrichtung heraus und in die Gasturbine verfahren werden kann. Sofern das betreffende Gasturbinen-Bauteil aus der Gasturbine in die Vorrichtung verfahren werden soll, was bei der Demontage des betreffenden Gasturbinen-Bauteils geschieht, erfolgt dies auch mit Hilfe des teleskopisch aus- und einfahrbaren Gestells.

Mit Hilfe der Vorrichtung wird das zu montierende oder demontierende Gasturbinen-Bauteil während des Einsetzens respektive Herausfahrens durch die Gehäuseöffnung der Gasturbine stets von der Vorrichtung und von dem Rahmen getragen, so dass eine manuelle Unterstützung des zu montierenden Bauteils durch Servicepersonal nicht erforderlich ist. Aufgrund der geführten Bewegung des Gasturbinen-Bauteils mittels des teleskopisch verfahrbaren Gestells kann ein schädigender Kontakt zwischen Gasturbinen-Bauteil und dem Rand der Gehäuseöffnung zuverlässig vermieden werden. Dies ist insbesondere bei der Montage von Ersatz- Gasturbinen-Bauteilen von Vorteil.

Da zudem das gesamte Gewicht des Gasturbinen-Bauteils über das Gestell, den Rahmen und die Vorrichtung von dem Gehäuse der Gasturbine selber getragen wird, ist der Kraftaufwand für das Servicepersonal vergleichsweise gering, was die Gefährdung des Servicepersonals wesentlich verringert.

Es wird also eine Vorrichtung angegeben, die zur Montage und Demontage eines Bauteils einer Gasturbine verwendet wird, um mit deren Hilfe eine Beschädigung von Gasturbinen-Bauteilen während der Montage/Demontage wirksam zu vermeiden.

Vorteilhafte Ausgestaltungen sind in den Unteransprüchen angegeben.

Gemäß einer ersten vorteilhaften Weiterbildung der Erfindung umfasst das Gestell Führungsschienen und einen daran längs verfahrbaren Schlitten, wobei die Führungsschienen senkrecht zum Fahrweg des Gestells ausgerichtet sind und bei der die Befestigungsvorrichtung am Schlitten angeordnet ist. Mit Hilfe einer derartigen Weiterbildung kann das zu montierende oder demontierende Gasturbinen-Bauteil nicht nur von außen in das Innere des Gasturbinengehäuses geführt werden, sondern das betreffende Gasturbinen-Bauteil kann bereits während der Einführbewegung oder auch nach Abschluss der Einführbewegung entlang einer zweiten Richtung bewegt werden, welche quer zur Fahrrichtung des teleskopisch verfahrbaren Gestells ist. Hierdurch ist es möglich, das Gasturbinen-Bauteil innerhalb des Gasturbinengehäuses besonders exakt zu positionieren, um es an weitere, tragende Komponenten der Gasturbine zu befestigen. Nach der Befestigung des Gasturbinen-Bauteils im Innern der Gasturbine an den weiteren Komponenten kann das Gasturbinen-Bauteil von der Befestigungsvorrichtung gelöst werden. Hierdurch ist die Montage des Gasturbinen-Bauteils im Innern der Gasturbine, was die Verwendung der Vorrichtung angeht, abgeschlossen.

Die Übergangsstücke können entlang ihrer Längserstreckung auch gekrümmt sein, was dazu führen kann, dass deren Lichtraumprofil geringfügig größer ist als die Gehäuseöffnung, durch die das Übergangsstück in die Gasturbine im ServiceFall eingesetzt werden soll. Durch die Möglichkeit, den Schlitten in einer zusätzlichen Richtung quer zum Verschiebeweg des Gestells zu bewegen, können auch derartig gekrümmte Gasturbinen-Bauteile einfach durch die Gehäuseöffnung in das Innere der Gasturbine hinein bewegt werden. Hierzu ist lediglich während der Einsetzbewegung abwechselnd oder gleichzeitig das betreffende Gasturbinen-Bauteil mit Hilfe des Gestells und des Schlittens in zwei Richtungen zu verfahren.

Um einen weiteren Freiheitsgrad für die Bewegung im Raum zu erhalten, können die Führungsschienen um die Fahrrichtung des Gestells drehbar gelagert sein. Hierdurch ist es möglich, dass das Gasturbinen-Bauteil nicht nur entlang zweier Richtungen, welche quer zueinander stehen, verfahrbar ist, sondern auch um eine Achse gedreht oder geschenkt werden kann, welche parallel zur Verschieberichtung des Gestells orientiert ist. Auch dies verbessert und erleichtert die Positionierung des Gasturbinen-Bauteils gegenüber weiteren Komponenten, an denen das Gasturbinen-Bauteil befestigt werden soll. Im Falle einer Demontage ist mit vorgenannter Ausgestaltung auch eine einfache Ausrichtung der Befestigungsvorrichtung gegenüber dem zu demontierendem Gasturbinen-Bauteil möglich, was die Verbindung des letztgenanntem mit der Befestigungsvorrichtung erleichtert.

Besonders bevorzugt ist die Ausgestaltung, bei der der Schlitten mittels eines vorzugsweise handkurbelbetriebenen Spindeltriebs antreibbar ist. Selbstverständlich kann der Schlitten oder auch das Gestell mittels eines elektrischen Linear-Antriebs verfahrbar sein. Durch die Verwendung eines Spindeltriebs oder eines elektrischen Antriebs kann die Bewegung des Gasturbinen-Bauteils ohne besonders große, manuelle Kräfte vom Servicepersonal erreicht werden. Gleichfalls kann durch die Verwendung eines kleingängigen Spindeltriebs eine Art Selbsthemmung des verfahrbaren Schlittens erreicht werden, wodurch eine ungewollte Bewegung des Gasturbinen-Bauteils bzw. der Befestigungsvorrichtung entlang der Führungsschienen oder des Gestells zuverlässig vermieden werden kann.

Um einen unzulässigen Kontakt mit bereits montierten Bauteilen der Gasturbine oder dem Gehäuse zu vermeiden, ist es von Vorteil, wenn zur Begrenzung des Fahrwegs des Gestells und/oder des Schlittens mehrere Anschläge vorgesehen sind. Dadurch kann der maximale Verschiebeweg des Gestells bzw. des Schlittens begrenzt werden, was Beschädigungen des zu montierenden oder demontierenden Gasturbinen-Bauteils oder auch bereits montierter Gasturbinenkomponenten verhindert.

Vorzugsweise sind die Anschläge dabei an unterschiedlichen Positionen des Fahrwegs variabel festlegbar, damit die Vorrichtung auch an unterschiedlich große Gasturbinen-Bauteile anpassbar ist.

Um Beschädigungen des zu montierenden Gasturbinen-Bauteils noch vor der Montage in der Gasturbine oder nach der Demontage aus der Gasturbine zu vermeiden, weist die Vorrichtung vorzugsweise eine Schutzhülle auf, in welche oder aus welcher das befestigte Gasturbinen-Bauteil einfahr- bzw. ausfahrbar ist.

Gemäß einer weiteren vorteilhaften Weiterbildung sind das Gestell und/oder der Schlitten mittels einer Feststelleinrichtung temporär feststellbar, so dass ggf. selbst bei Versagen der Hemmung des Spindeltriebs eine ungewollte Bewegung des Gestells oder des Schlittens und ggf. des Gasturbinen-Bauteils sicher vermieden werden kann. Dies verhindert Beschädigungen sowohl am Gasturbinen-Bauteil als auch an der Vorrichtung selber.

Um das Gasturbinen-Bauteil vergleichsweise einfach an der Befestigungsvorrichtung befestigen zu können, ist vorgesehen, dass das zu montierenden Gasturbinen-Bauteil mit der Befestigungsrichtung verschraubt oder verspannt werden kann. Mit Hilfe der vorgenannten Verbindungstechnik kann eine einfache und schnell lösbare Verbindung von Gasturbinen-Bauteil und Vorrichtung angegeben werden, was die Montagezeiten kurz hält.

Bevorzugtermaßen ist das Gasturbinen-Bauteil als Brenner, als Brennerrohr oder als Übergangsstück einer Gasturbine ausgebildet.

Um eine für deren Transport vergleichsweise kompakte Vorrichtung anzugeben, ist diese modular ausgestaltet und somit in Einzelteile zerlegbar.

Vorzugsweise sind an dem Rahmen Mittel zur Befestigung von Hebezeugen angeordnet, um die Vorrichtung, mit oder ohne daran befestigtem Gasturbinen-Bauteil, mit Hilfe der Unterstützung von einem Kran oder anderen geeigneten Hebezeugen zur Gasturbine oder von der Gasturbine weg zu bewegen.

Auch dies verhindert Beschädigungen sowohl an der Vorrichtung als auch am zu montierenden oder demontierenden Gasturbinen-Bauteil. Gleichfalls kann hierdurch die Gefährdung des Servicepersonals verringert werden.

Eine Ausführungsform der Erfindung, weitere Merkmale sowie mit den Merkmalen einhergehende Vorteile werden in der nachfolgenden Figurenbeschreibung angegeben. Es zeigt
- FIG 1 - FIG3: eine perspektivische Darstellung eines Ge- häuseabschnittes für stationäre Gasturbinen mit einem Brenner und einer an dem Gehäuse befestigten erfindungsgemäßen Vorrichtung,
- FIG 4: die erfindungsgemäße Vorrichtung in perspek- tivischer Darstellung mit ausgefahrenem Ge- stell und daran befestigten Gasturbinen-Bau- teil,
- FIG 5: die Vorrichtung mit eingefahrenem Gestell, daran befestigten Gasturbinen-Bauteil, mon- tiert an einem Gasturbinengehäuse und
- FIG 6, FIG 7: die am Gestell angeordneten Führungsschienen sowie ein längs daran verfahrbarer Schlitten als Teil der erfindungsgemäßen Vorrichtung in perspektivischer Darstellung.

Gleiche Bauteile sind mit identischen Bezugszeichen versehen.

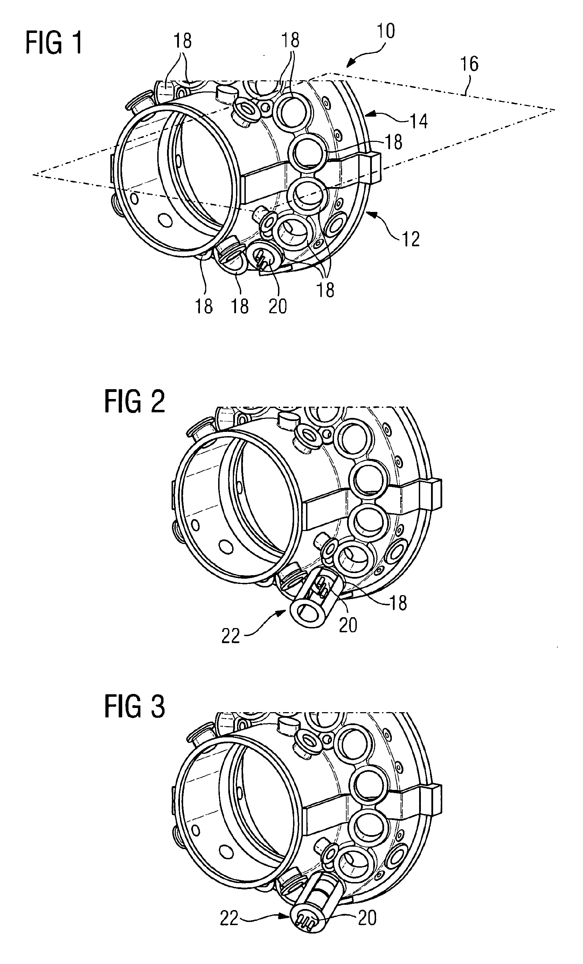

In FIG 1 ist ein Teil eines Gehäuses 10 einer stationären Gasturbine in perspektivischer Darstellung gezeigt. Das Gehäuseteil umfasst eine untere Ringhälfte 12 sowie eine obere Ringhälfte 14, welche flanschartig in einer Teilungsebene 16 aneinander liegen und deren Flansche miteinander verschraubt sind. In jeder Ringhälfte 12, 14 sind Öffnungen 18 vorgesehen, die insgesamt alle auf einem gedachten Kreis liegen, welcher konzentrisch zur Maschinenachse ist. Bei den Öffnungen 18 handelt es sich in der Regel um Brenneröffnungen. In der unteren Ringhälfte 12 ist in einer der Öffnungen 18 ein Brenner 20 eingesetzt, wodurch die Öffnung 18 verschlossen ist. Durch die Öffnungen 18 können auch Bauteile von Rohrbrennkammern der Gasturbine in das Innere der Gasturbine eingebracht werden, wenn das Abheben der oberen Ringhälfte des Gehäuses 10 zu aufwändig ist. Bei den Bauteilen kann es sich um aus dem Stand der Technik bekannte Brennerrohre oder auch Übergangsstücke handeln. Aufgrund des vergleichsweise großen Formats der Bauteile und deren Ausführung aus temperaturfestem Stahl sind diese vergleichsweise schwer und dadurch für Servicepersonal nur mit großem Kraftaufwand handhabbar. Um nun einen vereinfachten als auch gefährdungsarmen Ausbau des Brenners 20, des Brennerrohres (ggf. samt Brenners) oder auch des Übergangsstücks zu ermöglichen, ist die Verwendung einer Vorrichtung 22 zur Montage und Demontage dieser Gasturbinen-Bauteile vorgesehen. Die Vorrichtung 22 ist in FIG 2 an der mit dem Brenner 20 verschlossenen Öffnung 18 schematisch dargestellt.

Zur Demontage des Brenners 20 wird dieser vom Gehäuse gelöst. Anschließend wird die Vorrichtung 22 an das Gehäuse festgelegt. Ein in FIG 2 nicht weiter dargestelltes Gestell der Befestigungsvorrichtung wird danach mit dem Brenner 20 verschraubt oder anderweitig befestigt. Zum Herausbewegen des Brenners 20 wird das Gestell in das Innere der Vorrichtung 22 eingefahren. Der in die Vorrichtung 22 bereits eingefahrene Brenner 20 ist in FIG 3 dargestellt.

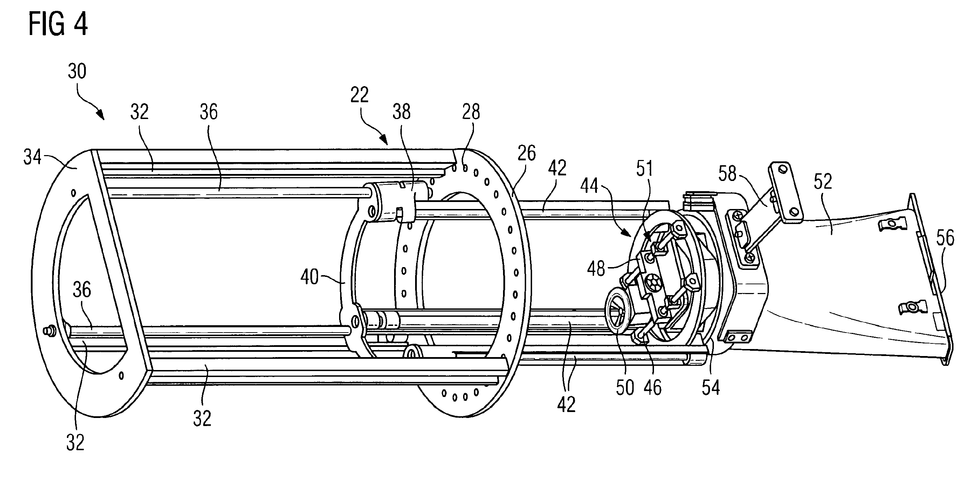

Die in FIG 2 und 3 lediglich schematisch gezeigte Vorrichtung 22 ist in FIG 4 detaillierter dargestellt. Die Vorrichtung 22 umfasst zumindest einen ringförmigen Montageflansch 26, in dem einen Vielzahl von Öffnungen 28 vorgesehen sind. Mit Hilfe sich durch die Öffnung 28 erstreckender und in das Gehäuse einschraubbarer Schrauben kann die Vorrichtung 22 starr und fest an das Gehäuse 10 der Gasturbine befestigt werden. Der ringförmige Montageflansch 26 ist Teil eines Rahmens 30, welcher mehrere Streben 32 aufweist. Die Streben 32 sind einerseits am Montageflansch 26 befestigt und andererseits an einem Endstück 34, welches kreissegmentartig ausgebildet sein kann. Zwischen dem Endstück 34 und dem Montageflansch 26 sind paarweise sich parallel zu den Streben 32 erstreckende Gleitschienen 36 vorgesehen. Es können auch mehr als drei Gleitschienen 36 oder auch mehr als drei Streben 32 vorgesehen sein, sofern das zu transportierende Gewicht des zu montierenden oder demontierenden Gasturbinen-Bauteils dies erforderlich macht. Im vorgegebenen Ausführungsbeispiel sind sowohl die Streben 32 als auch die Gleitschienen 36 ungleichmäßig über den Umfang des Montageflanschs 26 verteilt, so dass entlang eines Kreisbogens in der Länge von 180° keine Strebe und keine Gleitschiene vorgesehen sind. In diesem Bereich ist eine Entnahmeöffnung vorhanden, aus der das in die Vorrichtung 22 eingefahrene Bauteil nach der Demontage der Vorrichtung 22 von der Gehäuseöffnung entnommen werden kann.

An den Gleitschienen 36 ist ein längs verfahrbares Gestell 38 vorgesehen, welches seinerseits an seinem ersten Ende ein ringförmiges Endstück 40 aufweisen kann. An dem Endstück 40 sind weitere Gleitschienen 42 vorgesehen, an denen ein weiteres Gestell 44 längs verfahrbar ist. Aufgrund der gewählten Konstruktion sind die Gestelle 38, 44 nach Art eines Teleskops in den Rahmen 30 bzw. in die Vorrichtung 22 einfahrbar. In der in FIG 4 gezeigten Position ist das weitere Gestell 44 aus dem Rahmen 30 verfahren. An dem weiteren Gestell 44 sind Führungsschienen 46 angeordnet, an denen ein daran längs verfahrbarer Schlitten 48 vorgesehen ist. Der Schlitten 48 ist mittels eines in FIG 4 nicht dargestellten Spindeltriebs quer zur Fahrrichtung des ersten Gestells 38 und des weiteren Gestells 44 verfahrbar. Der Spindeltrieb kann dabei mittels der Handkurbel 50 angetrieben werden. Am Schlitten 48 ist eine Befestigungsvorrichtung 51 vorgesehen, an der das zu montierenden oder demontierende Bauteil der Gasturbine befestigt werden kann. In FIG 4 ist als zu montierendes bzw. demontierendes GT-Bauteil ein Übergangsstück 52 gezeigt, welches in der Gasturbine ein einströmseitiges, im Querschnitt rundes Ende 54 sowie ein ausströmseitiges und im Querschnitt sektorförmiges zweites Ende 56 aufweist. Innerhalb der Gasturbine ist das Übergangsstück 52 von einer Strebe 58 und einem U-förmigen Profil gehalten, welches mit dem einströmseitigen Ende 54 des Übergangsstücks 52 verschraubt werden kann.

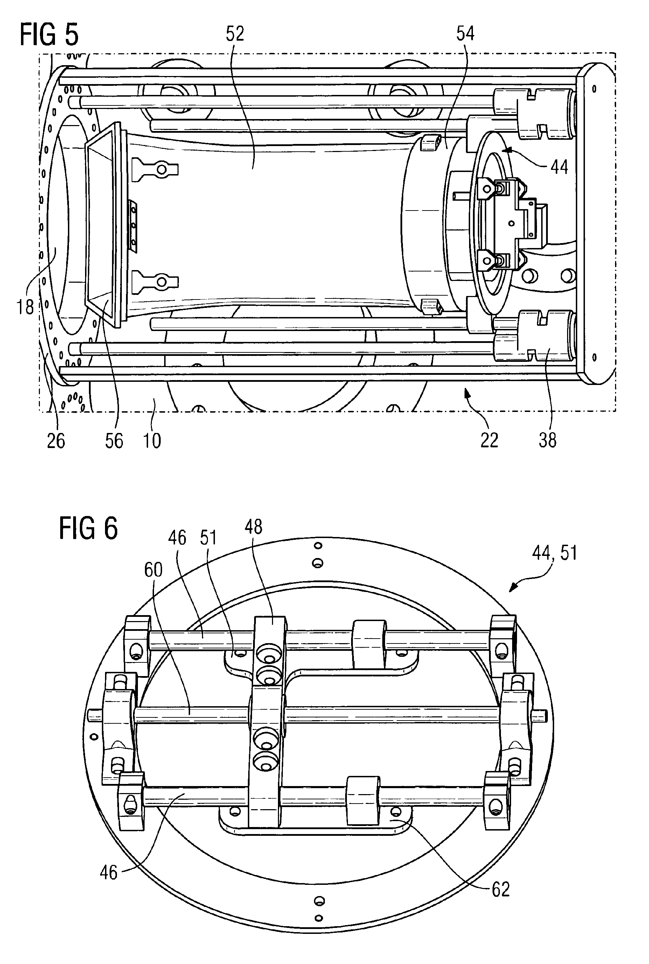

FIG 5 zeigt in perspektivischer Darstellung die an ein Gasturbinengehäuse 10 befestigte Vorrichtung 22, wobei die im Montageflansch 26 zur Befestigung am Gehäuse 10 erforderlichen Schrauben nicht dargestellt sind. In der in FIG 5 gewählten Perspektive ist das sektorförmige ausströmseitige Ende 56 des Übergangsstücks 52 fliegend gelagert, das einströmseitige Ende 54 ist an der Befestigungsvorrichtung 51 festgelegt. Das Übergangsstück 52 befindet sich innerhalb des Rahmens 30 der Vorrichtung 22. Sofern das Übergangsstück 52 zur Montage in der Gasturbine vorgesehen ist, kann zumindest das weitere Gestell 44 in das Innere der Gasturbine verfahren werden.

Anstelle der in FIG 4 und FIG 5 gezeigten Übergangsstücks 52 kann selbstverständlich mit Hilfe der Vorrichtung 22 auch ein Brennerrohr einer Gasturbine oder auch der Brenner 20 der Gasturbine montiert oder demontiert werden.

Zur Begrenzung des Fahrwegs des ersten Gestells 38, des weiteren Gestells 44 oder auch des Schlittens 48 sind an den jeweiligen Führungsschienen 46 oder Gleitschienen 36, 42 nicht gezeigte Anschläge vorgesehen, mittels denen der Verschiebeweg bzw. Fahrweg des betreffenden verschiebbaren Gestells 38, 44 oder Schlittens 48 beschränkt werden kann. Vorzugsweise sind diese Anschläge an unterschiedlichen Positionen des Fahrwegs befestigbar, um je nach Größe des zu montierenden oder demontierenden Gasturbinen-Bauteils einen bauteilschädigenden Kontakt mit dem Gehäuse 10 zu vermeiden.

Gleichfalls können am ersten Gestell 38, am weiteren Gestell 44 und/oder auch am Schlitten 48 Mittel vorgesehen sein, mittels denen das verfahrbare Bauteil an den entsprechenden Gleitschienen 36, 42 temporär festlegbar ist, um das Gasturbinen-Bauteil beispielsweise zum Verschrauben mit im Innern der Gasturbine vorgesehenen Halterungen zu fixieren.

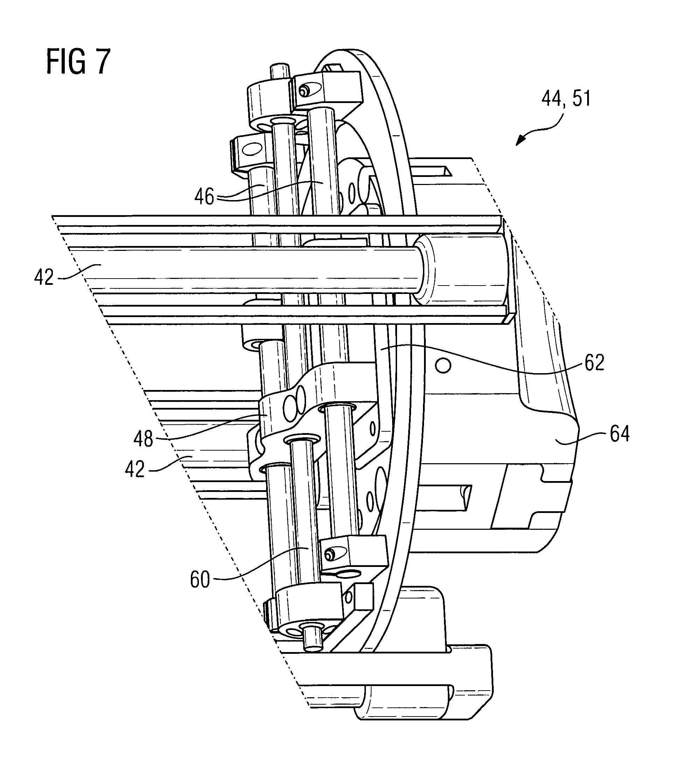

Die Befestigungsvorrichtung 51, welche in FIG 7 perspektivisch dargestellt ist, kann dabei zum Verschrauben oder zum Verspannen mit dem betreffenden Gasturbinen-Bauteil ausgebildet sein. Auch ist es möglich, die Führungsschienen 46 drehbar um eine Achse auszugestalten, welche parallel zum Verschiebeweg des ersten oder weiteren Gestells 38, 44 ist.

In FIG 6 und FIG 7 ist das weitere Gestell 44 samt den daran befestigten Führungsschienen 46 und des daran verfahrbaren Schlittens 48 im Detail dargestellt. Mittig zwischen den beiden Führungsschienen 46 ist eine Gewindestange 60 als Teil des Spindeltriebs dargestellt, welcher über die in FIG 6 und FIG 7 nicht dargestellt Handkurbel gedreht werden kann. In das Außengewinde der Stange 60 greift ein mit dem Schlitten 48 starr verbundenes Innengewinde ein, wodurch der Schlitten 48 längs der Führungsschienen 46 bei Drehungen der Gewindestange 60 verfahrbar ist. Der Schlitten 48 weist beispielsweise gemäß FIG 6 zwei Flansche 62 als Befestigungsvorrichtung 51 zum Verschrauben mit dem zu montierenden oder demontierenden Gasturbinen-Bauteil auf. Gemäß einer alternativen Ausgestaltung, welche in FIG 7 gezeigt ist, kann an den Flanschen 62 auch eine Spannvorrichtung in Form einer Drei-Backen-Spannvorrichtung 64 als Befestigungsvorrichtung 51 vorgesehen sein, mittels der das zu montierende oder demontierenden Gasturbinen-Bauteil am weiteren Gestell 44 befestigt werden kann.

Bei der Befestigung der Vorrichtung 22 an der Öffnung 18 des Gasturbinengehäuses 10 kann mit Hilfe des teleskopisch verfahrbaren Gestells 38, 44 das zu montierende oder demontierende Gasturbinen-Bauteil entlang der Längsrichtung der Gasturbine verfahren werden. Die Längsrichtung entspricht dabei der Axialrichtung der Gasturbine. Da die Führungsschienen 46 quer und insbesondere senkrecht zum Verfahrweg des Gestells 38, 44 ausgerichtet ist, kann durch die Betätigung der Handkurbel das zu montierende Gasturbinen-Bauteil in Radialrichtung der Gasturbine verfahren werden. Wenn darüber hinaus die Führungsschienen 46 samt Schlitten 48 gegenüber dem weiteren Gestell 44 drehbar gelagert ist, so kann zudem das Gasturbinen-Bauteil um eine Achse parallel zum Verschiebeweg des betreffenden Gestells 38, 44 gedreht werden. Diese Maßnahmen erleichtern das exakte Positionieren des GT-Bauteils.

Insgesamt wird mit der Erfindung eine Vorrichtung 22 zur Montage und Demontage eines Gasturbinen-Bauteils vorgeschlagen, welche zumindest einen Rahmen 30 mit einem ringförmigen Montageflansch 26 zur Befestigung der Vorrichtung 22 an einem Gehäuse 10 der Gasturbine und ein sich am Rahmen 30 abstützenden teleskopisch ausfahrbaren Gestell 38, 44 mit einer Befestigungsvorrichtung 51 aufweist, welche Befestigungsvorrichtung 51 zum Befestigen mit einem Gasturbinen-Bauteil ausgestaltet ist. Um Beschädigungen des Gasturbinen-Bauteils bei Einsetzen in das Innere der Gasturbine durch eine Gehäuseöffnung 18 oder auch um die Gefährdung von Servicepersonal während dieser Einsetzbewegung zu vermeiden, ist vorgesehen, das Gasturbinen-Bauteil mit Hilfe der Vorrichtung 22 aus der Vorrichtung 22 in die Gasturbine bzw. aus der Gasturbine in die Vorrichtung 22 zu verfahren.

## Patentansprüche

1. Vorrichtung (22),
zur Montage und Demontage eines Bauteils einer Gasturbine, umfassend:
• einen Rahmen (30) mit einem ringförmigen Montageflansch (26) zur Befestigung der Vorrichtung (22) an einer ringförmigen Öffnung (18) eines Gehäuses (10) der Gasturbine und
• einem sich am Rahmen (30) abstützenden teleskopisch ausfahrbarem Gestell (38, 44) mit einer Befestigungsvorrichtung (51), welche zum Befestigen mit einem Gasturbinen-Bauteil ausgestaltet ist,
um das an das Gestell (38, 44) befestigte Gasturbinen-Bauteil aus der Vorrichtung (22) in die Gasturbine bzw. aus der Gasturbine in die Vorrichtung (22) zu verfahren.

2. Vorrichtung (22) nach Anspruch 1,
bei der das Gestell (44) Führungsschienen (46) und einen daran längs verfahrbaren Schlitten (48) umfasst, welche Führungsschienen (46) senkrecht zum Fahrweg des Gestells (44) ausgerichtet sind und bei der die Befestigungsvorrichtung (51) am Schlitten (48) angeordnet ist.

3. Vorrichtung (22) nach Anspruch 1 oder 2,
bei der die Führungsschienen (46) um die Fahrrichtung des Gestells (44) drehbar gelagert sind.

4. Vorrichtung (22) nach Anspruch 1, 2 oder 3,
bei dem der Schlitten (48) mittels eines vorzugsweise handkurbelbetriebenen Spindeltriebs antreibbar ist.

5. Vorrichtung (22) nach einem der Ansprüche 1 bis 4,
bei der mehrere Anschläge zur Begrenzung des Fahrwegs des Gestells (38, 44) und/oder des Schlittens (48) vorgesehen sind.

6. Vorrichtung (22) nach Anspruch 5,
bei der die Anschläge an unterschiedlichen Positionen des Fahrwegs festlegbar sind.

7. Vorrichtung (22) nach einen der Ansprüche 1 bis 6,
die eine Schutzhülle aufweist, in welche oder aus welcher das befestigte Bauteil einfahrbar bzw. ausfahrbar ist.

8. Vorrichtung (22) nach einem der Ansprüche 1 bis 7,
bei der das Gestell (38, 44) und/oder der Schlitten (48) mittels einer Feststelleinrichtung temporär feststellbar ist.

9. Vorrichtung (22) nach einem der Ansprüche 1 bis 8,
bei der die Befestigungsvorrichtung (51) zum Verschrauben oder zum Verspannen des Gasturbinen-Bauteils ausgebildet ist.

10. Vorrichtung (22) nach einem der Ansprüche 1 bis 9,
bei der das Gasturbinen-Bauteil als Brenner, Brennerrohr oder Übergangsstück ausgebildet ist.

11. Vorrichtung (22) nach einem der Ansprüche 1 bis 10,
welche modular ausgestaltet ist.

12. Vorrichtung (22) nach einem der Ansprüche 1 bis 11,
mit am Rahmen (30) angeordneten Mitteln zur Befestigung von Hebezeugen.
